# EUROPÄISCHE PATENTSCHRIFT

(11) **EP 1 422 835 B1**
(45) Veröffentlichungstag und Bekanntmachung des Hinweises auf die Patenterteilung: **06.02.2008**
(21) Anmeldenummer: 02360326.9
(22) Anmeldetag: 25.11.2002
(51) Int. Cl.: H04B 3/32

(54) **Telekommunikations-Vorrichtung zur Kompensation von Nebensprechen**
Telecommunication apparatus for crosstalk compensation
Appareil de télécommunication pour la compensation de la diaphonie

(43) Veröffentlichungstag der Anmeldung: 26.05.2004
(73) Patentinhaber: Alcatel Lucent, 75008 Paris (FR)
(72) Erfinder: Ashrafi, Bagher, 73240 Wendlingen (DE)
(74) Vertreter: Menzietti, Domenico

(56) Entgegenhaltungen:
- EP-A- 0 814 574
- US-A- 5 271 037
- US-A- 5 887 032

## Beschreibung

Die Erfindung betrifft eine Telekommunikations-Vorrichtung zur Kompensation von Nebensprechen in einem Bündel von 2-Draht Leitungen über die mindestens zwei verschiedene Dienste übertragen werden.

In EP 0 480 323 B1 ist eine Leitungseinrichtung zur Kompensation von Nebensprechen offenbart. Referenzsignals, die aus Sende- und/oder Empfangsleitungen entnommen werden, werden über adaptive Filter Empfangsleitungen zugeführt. Durch die negative Addition dieser Referenzsignale zu den Empfangsignalen werden Störungen, die in den Empfangssignalen enthalten sind, kompensiert. Es ist vorgesehen, für jede zu kompensierende Empfangsleitung eine Anzahl von adaptiven Filtern vorzusehen, die mindestens der Anzahl der Sendeleitungen entspricht. Für eine Leitungseinrichtung von beispielsweise 32 Sende- und 32 Empfangsleitungen sind somit mindestens 32 adaptive Filter für jede zu kompensierende Empfangsleitung vorgesehen. Bei 32 Empfangsleitungen sind somit mindestens 32 mal 32 gleich 1024 adaptive Filter notwendig. Adaptive Filter sind teure Bauteile, die die Herstellungskosten einer Leitungseinrichtung erheblich erhöhen.

Aus US 5,887,032 ist eine Telekommunikationsvorrichtung zur Kompensation von Nebensprechen in einem Bündel von 2-Drahtleitungen bekannt, bei dem eine adaptive Schätzung von Nebensprechen aus ausgewählten anderen Leitungen durchgeführt wird. Dabei ist für jede Leitung eine analoge Leitungskarte vorgesehen, die eine analog/digital Umsetzung durchführt. Die digitalisierten Signale werden in einer Verarbeitungseinheit analysiert, die Verarbeitungseinheit stellt dann entsprechend dem Ergebnis der Abschätzung Filterparameter auf der analogen Leitungskarte ein. Das Verfahren eignet sich für Multiton-modulierte ADSL oder VDSL Signale, bei denen die Rahmendauer variiert. Für ISDN-Übertragung ist es nicht geeignet.

Aufgabe der Erfindung ist es, eine Telekommunikations-Vorrichtung zur Kompensation von Nebensprechen zu schaffen, die die Anzahl der benötigten adaptiven Filter minimiert. Gelöst wird diese Aufgabe durch eine Telekommunikations-Vorrichtung gemäß Patentanspruch 1.

Durch die Verwendung einer Schaltvorrichtung können die Anzahl der benötigten adaptiven Filter erheblich reduziert und die Geräuschunterdrückung bei 2-Draht Leitungen optimiert werden. Mittels der Schaltvorrichtung werden nur solche Signale von Sende-, Empfangs- und/oder Blindleitungen ausgewählt, die einen erheblichen Störeinfluss auf das jeweilige Empfangssignal haben. Für eine Leitungseinrichtung von beispielsweise 32 Sende- und 32 Empfangsleitungen sind beispielsweise nur 4 adaptive Filter für jede zu kompensierende Empfangsleitung vorgesehen. Bei 32 Empfangsleitungen sind somit nur 32 mal 4 gleich 128 adaptive Filter notwendig. Dies entspricht einer Einsparung von 896 adaptiven Filtern. Es werden für jede Empfangsleitung die vier größten Störer ermittelt und diese als Kompensationssignale der Empfangsleitung zugeführt. Durch die negative Addition dieser ausgewählten Kompensationssignale zu den Empfangsignalen werden Störungen, die in den Empfangssignalen enthalten sind, erheblich kompensiert. Der Vorteil der geringeren Anzahl von adaptiven Filtern wird erkauft mit dem geringeren Kompensationsgrad, da nun nicht mehr alle Sende-, Empfangs- und/oder Blindleitungsstörsignale kompensiert werden können. Doch wird durch die Limitierung auf eine bestimmte Anzahl von adaptiven Filtern, z.B. vier für jede Empfangsleitung, eine ausreichende Kompensation im Bereich von 70 bis 90 % erzielt, da beispielsweise die vier größten Stören prozentual sehr gewichtig sind und die Hinzunahme weiterer Kompensationssignale die Kompensation nur unwesentlich verbessern würde. Mittels der Schaltvorrichtung und den Kompensationsschaltungen wird die Möglichkeit geschaffen in einer Trainingsphase für jede Empfangsleitung individuell zu ermitteln, welche der anderen Leitungen sie negativ beeinflusst. Nach Abschluss der Trainingsphase sind für jede Empfangsleitung die vier größten Störer ermittelt und werden als Kompensationssignale der jeweiligen Empfangsleitung zugeführt. Die Trainingsphase kann in regelmäßigen zeitlichen Abständen wiederholt werden, um die Kompensation zu optimieren. Dies kann auch während des Betriebs erfolgen. In den Kompensationsschaltungen kann eine analoge oder eine digitale Kompensation vorgesehen sein.

Durch die Verwendung von Weichen kann die erfindungsgemäße Telekommunikations-Vorrichtung an jeder beliebigen Stelle im Telekommunikationsnetz platziert werden. Erst durch die 2-Draht-4-Draht Umsetzung und der damit verbundenen Separierung von Sende- und Empfangsleitungen kann die Kompensation durchgeführt werden.

In einer vorteilhaften Ausgestaltung der Erfindung sind der Schaltvorrichtung mindestens zwei Dienstauswahlmodule vorgeschaltet sind, um zusammen mit den Kompensationsschaltungen aus mindestens einem Teil der der Schaltvorrichtung zugeführten Leitungen den auf der jeweiligen Leitung übertragenen Dienst zu ermitteln. Jedes Dienstauswahlmodul beinhaltet mindestens zwei Dienst-spezifische Modems oder Dienst-spezifische Demodulatoren und zugehörige Schalter, um die Signale einer Leitung wahlweise jedem Modem bzw. Demodulator zuführen zu können. Jedes Dienst-spezifische Modem bzw. jeder Demodulator demoduliert die empfangenen Signale einer Leitung für einen bestimmten Dienst. Demodulierte Signale sind geeigneter für die Kompensation, wodurch diese verbessert wird.

Vorteilhafte Ausgestaltungen der Erfindung sind den abhängigen Ansprüchen sowie der nachfolgenden Beschreibung zu entnehmen.

Im folgenden werden zwei Ausführungsbeispiele der Erfindung unter Zuhilfenahme von sechs Figuren erläutert. Es zeigen:
- Fig. 1: eine schematische Darstellung einer erfindungsgemäßen Telekommunikations-Vorrichtung zur Kompensation von Nebensprechen,
- Fig. 2: eine schematische Darstellung einer Kompensationsschaltung der erfindungsgemäßen Telekommunikations-Vorrichtung aus Fig. 1,
- Fig. 3: eine schematische Darstellung eines Echo-Cancellers der Kompensationsschaltung aus Fig. 2,
- Fig. 4: eine schematische Darstellung einer weiteren Kompensationsschaltung der erfindungsgemäßen Telekommunikations-Vorrichtung aus Fig. 1,
- Fig. 5: eine schematische Darstellung einer Schaltvorrichtung für die weitere Kompensationsschaltung aus Fig. 4 und
- Fig. 6: eine schematische Darstellung eines Dienstauswahlmoduls zur Vorschaltung vor die Schaltvorrichtung aus Fig. 5.

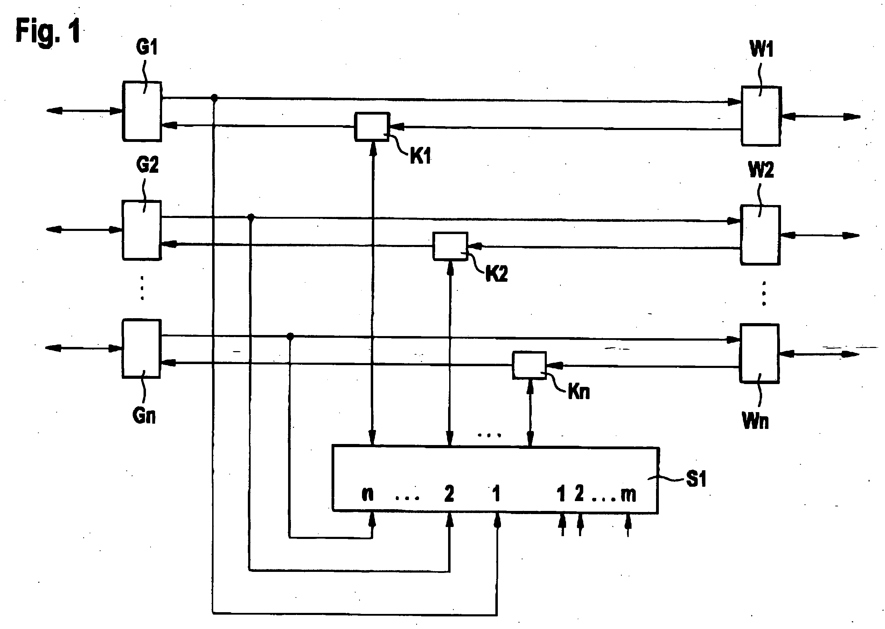

Das erste Ausführungsbeispiel wird nun unter Zuhilfenahme der Figuren 1 bis 3 erläutert.

Fig. 1 zeigt eine erfindungsgemäße Telekommunikations-Vorrichtung zur Kompensation von Nebensprechen.

In Zugangsnetzen der Telekommunikation werden u.a. DSL Access Multiplexer eingesetzt. Sie werden üblicherweise als DSLAM oder ASAM = Advanced Services Access Manager bezeichnet; DSL = Digital Subscriber Line. Teilnehmerseitig ist ein DSLAM mit einer Vielzahl von Teilnehmern verbunden; dies können private Teilnehmer und/oder Geschäftskunden sein. Netzseitig ist ein DSLAM z.B. mit Edge Equipment, einem Edge Router, einem Remote DSLAM, dem ATM, dem SDH, dem SONET, dem Ethernet oder dem Internet verbunden; ATM = Asynchroner Transfer Modus, SDH = Synchrone Digitale Hierarchie, SONET = Synchronous Optical Network. Ein DSLAM ist üblicherweise in einem Central Office angeordnet. Teilnehmerseitig werden über 2-Draht Leitungen verschiedene Dienste zur Verfügung gestellt. Dies können sein: ADSL, HDSL, G.SHDSL, VoDSL, POTS, ISDN, Voice, Data, Video, etc., VoDSL = Voice over DSL, POTS = Public Switched Telephone Network, ISDN = Integrated Digital Services Network. Die 2-Draht Leitungen mehrerer Teilnehmer werden zumeist in einem Bündel verlegt. Durch die örtliche Nähe zueinander können Signale von der einen Leitung auf eine andere übersprechen. Dies führt zu Störungen in der einen Leitung. Allgemein wird dies als Nebensprechen bezeichnet. Darunter werden auch Impulsstörungen, Echos, Übersprechen, Nahnebensprechen und Fernnebensprechen subsumiert. Bevor die Teilnehmersignale im DSLAM gemultiplext und netzseitig weitergeleitet werden ist es vorteilhaft das Nebensprechen weitestgehend zu kompensieren. 2-Draht Leitungen mehrerer Teilnehmer, die verschiedene Dienste in Anspruch nehmen sind beispielsweise in einem Bündel verlegt. Netzseitig werden die verschiedenen Dienste z.B. in verschiedenen DSLAMs verarbeitet, z.B. ADSL-Dienst in einem ersten DSLAM, SHDSL-Dienst in einem zweiten DSLAM, HDSL-Dienst in einem dritten DSLAM. Zwischen DSLAMs und Teilnehmer ist ein Kabelverzweiger geschaltet zwecks teilnehmerseitiger Zusammenführung der 2-Draht Leitungen der DSLAMs in ein Bündel und netzseitiger Aufteilung des Bündels in die verschiedenen Dienste. Vor der Aufteilung ist eine Kompensation sinnvoll. Deshalb ist die Platzierung der erfindungsgemäßen Telekommunikations-Vorrichtung in einem Kabelverzweiger vorteilhaft.

Die Telekommunikations-Vorrichtung beinhaltet n Weichen G1, G2, Gn, n Weichen W1, W2, Wn, n Kompensationsschaltungen K1, K2, Kn sowie eine Schaltvorrichtung S1; n ist eine natürliche Zahl, z.B. 32.

Ein Weiche G1, G2, Gn, auch als Gabelschaltung bezeichnet, dient der Separierung von Sende- und Empfangsleitung. In der Weiche G1, G2, Gn findet eine 2-Draht 4-Draht Umsetzung statt.
Ein Weiche W1, W2, Wn, auch als Gabelschaltung bezeichnet, dient der Separierung von Sende- und Empfangsleitung. In der Weiche W1, W2, Wn findet eine 2-Draht 4-Draht Umsetzung statt.

Telekommunikationssignale werden bidirektional über eine 2-Draht Leitung übertragen. In der Telekommunikations-Vorrichtung wird die 2-Draht Leitung in zwei unidirektionale 2-Draht Leitungen aufgeteilt, eine 2-Draht Leitung dient als Sendeleitung und zur Übertragung von Signalen zu den Teilnehmern, die andere 2-Draht Leitung dient als Empfangsleitung und zum Empfang von Teilnehmersignalen.

Weichen G1, G2, Gn und Weichen W1, W2, Wn sind jeweils über eine 4-Draht Leitung (eine Sendeleitung, eine Empfangsleitung) miteinander verbunden. In jede Empfangsleitung ist eine Kompensationsschaltung K1, K2, Kn eingefügt.

Jede Kompensationsschaltung K1, K2, Kn dient dazu, Nebensprechen in einer Empfangsleitung weitestgehend zu kompensieren. Jede Kompensationsschaltung K1, K2, Kn ist mit der Schaltvorrichtung S1 verbunden.

Die Schaltvorrichtung S1 dient dazu, zusammen mit den Kompensationsschaltungen aus einer Vielzahl von Leitungen für individuelle Empfangsleitungen spezifische Kompensationssignale auszuwählen. Die Schaltvorrichtung hat eine Vielzahl von Eingängen, im Beispiel n + m, und eine Vielzahl von Ausgängen. Die Ausgänge sind mit den Kompensationsschaltungen K1, K2, Kn verbunden, wobei jeweils mehrere Ausgänge mit einer Kompensationsschaltung K1, K2, Kn verbunden sein können, z.B. jeweils vier. Die ersten n Eingänge sind beispielsweise mit den n Sendeleitungen verbunden; n ist eine natürliche Zahl, z.B. 32. Die weiteren m Eingänge sind beispielsweise mit den n Empfangsleitungen und Blindleitungen, d.h. ungenutzten Leitungen verbunden. Die Schaltvorrichtung S1 kann somit aus einem Repertoire von Leitungen schöpfen und aus diesen geeignete Kompensationssignale für die jeweiligen Kompensationsschaltungen K1, K2, Kn auswählen, um eine möglichst effektive Kompensation zu erzielen.

In bisherigen Kompensationsschaltungen erwies es sich stets als Problem nicht zu wissen, welche Leitung welche andere Leitung negativ beeinflusst und folglich Nebensprechen generiert. Dies rührt u.a. von der Verdrillung der Leitungen im Leitungsbündel, das zu den Teilnehmern verlegt ist. Werden nun alle Leitungen pauschal auf jede Leitung zwecks Kompensation rückgekoppelt, so steigt die Anzahl der benötigten adaptiven Filter immens an, was zum einen zu einer Kostenexplosion führt und zum anderen für Zwecke der Kompensation unnötige Rückkopplungen erzeugt, die viel Platz verschwenden. Werden andererseits beispielsweise die Anzahl der Rückkopplungen begrenzt auf alle Sendeleitungen, so werden zum einen eine unter Umständen nicht ausreichende Kompensation erzielt, z.B. nur Nahnebensprechen, und zum anderen für Zwecke der Kompensation unnötige Rückkopplungen erzeugt, die viel Platz verschwenden und die Herstellungskosten erhöhen.

Mittels der Schaltvorrichtung S1 und den Kompensationsschaltungen K1, K2, Kn aus Fig.1 wird nun die Möglichkeit geschaffen in einer Trainingsphase für jede Empfangsleitung individuell zu ermitteln, welche der anderen Leitungen sie negativ beeinflusst. In der Trainingsphase, die z.B. bei der Initialisierung durchgeführt wird und/oder während des Betriebs in regelmäßigen Abständen, wird ein Datenaufkommen künstlich derart erzeugt, dass alle Sende- und alle Empfangsleitungen mit Signalen belegt sind oder es wird der reelle Datentransfer zugrunde gelegt. Zur Ermittlung welche Leitung Nebensprechen in der ersten Empfangsleitung generiert, schaltet Schaltvorrichtung S1 zunächst die erste Sendeleitung zur ersten Kompensationsschaltung K1 durch. Die erste Kompensationsschaltung K1 ermittelt, ob durch die Rückkopplung mit der ersten Sendeleitung eine Verbesserung der Empfangsqualität auf der ersten Empfangsleitung eintritt und teilt ihr Ergebnis der Schaltvorrichtung S1 mit. Danach schaltet die Schaltvorrichtung S1 die zweite Sendeleitung zur ersten Kompensationsschaltung K1 durch. Die erste Kompensationsschaltung K1 ermittelt, ob durch die Rückkopplung mit der zweiten Sendeleitung eine Verbesserung der Empfangsqualität auf der ersten Empfangsleitung eintritt und teilt ihr Ergebnis der Schaltvorrichtung S1 mit. In der Folge werden sukzessive alle Eingänge der Schaltvorrichtung S1 auf die erste Kompensationsschaltung K1 geschaltet und jeweils der Einfluss auf die Empfangsqualität auf der ersten Empfangsleitung ermittelt. Die Schaltvorrichtung S1 speichert alle Ergebnisse und wählt aus den Leitungen am Eingang der Schaltvorrichtung S1 diejenigen aus, die den größten positiven Einfluss auf die Kompensation generiert haben. Somit werden der ersten Kompensationsschaltung K1 nur Signale von denjenigen Leitungen zugeführt, mittels derer wirklich das Nebensprechen reduziert werden kann.

Auf gleiche Art und Weise wird auch für die übrigen n-1 Empfangsleitungen eine Auswahl von Leitungen getroffen, die für Kompensationszwecke verwendet werden. ,

Die Anzahl der adaptiven Filter je Kompensationsschaltung K1, K2, Kn ist begrenzt. Für jede Kompensationsschaltung K1, K2, Kn ist eine geeignete Anzahl zu wählen. Bei 32 Sendeleitungen und 32 Empfangsleitungen werden z.B. 4 adaptive Filter zum Zwecke der Kompensation des Nebensprechens auf einer Empfangsleitung mittels Signalen von vier ermittelten Störleitungen verwendet. Die Anzahl der adaptiven Filter wird zum einen so gewählt, dass eine ausreichende Kompensation erzielt werden kann und zum anderen die Herstellungskosten für eine Kompensationsschaltung K1, K2, Kn minimiert werden.

Es hat sich gezeigt, dass bei 32 Sendeleitungen und 32 Empfangsleitungen eine ausreichende Kompensation im Bereich von 70-90% erzielt werden kann, wenn die vier stärksten Störer kompensiert werden. Dies bedeutet, dass wenn die vier stärksten Störer identifiziert sind, es ausreichend ist, die entsprechenden Leitungen rückzukoppelh.

In der Trainingsphase wurden für die erste Empfangsleitung beispielsweise die dritte Sendeleitung, die sechszehnte Sendeleitung, die vierte Empfangsleitung und die neuzehnte Empfangsleitung als die stärksten Störer ermittelt. Die Schaltvorrichtung S1 schaltet dann diese Leitungen zur ersten Kompensationsschaltung K1 permanent durch, um während des Betriebs eine optimierte Kompensation des Nebensprechens zu erzielen.

In einer bevorzugten Ausführungsform kann während des Betriebs der Kompensationsgrad der ausgewählten Kompensationssignale stetig oder in regelmäßigen Abständen überwacht werden. Kompensationssignale, die im realen Betrieb keinen oder nur untergeordneten Einfluss auf die Kompensation haben können durch Kompensationssignale anderer Leitungen ausgetauscht werden. Die Überwachung und die Umschaltung auf andere Leitungen wird beispielsweise durch einen in der Schaltvorrichtung S1 integrierten Prozessor und einen Speicher durchgeführt. Der Prozessor ist. z.B. als Mikroprozessor oder als Digitaler Signalprozessor ausgeführt. Im Speicher sind beispielsweise für jede Empfangsleitung alle Eingangsleitungen geordnet nach ihrem Kompensationsgrad für die jeweilige Empfangsleitung gespeichert. Ermittelt der Prozessor im realen Betrieb, dass z.B. die zweite der vier ausgewählten Leitungen keinen oder nur einen untergeordneten Einfluss auf die Kompensation hat, so wird diese Leitung nicht mehr zur entsprechenden Kompensationsschaltung K1, K2, Kn durchgeschaltet. Die im Speicher als fünftbeste Leitung abgespeicherte Leitung wird nun zusätzlich zu der ersten, dritten und vierten ausgewählten Leitung durchgeschaltet. Ermittelt der Prozessor im realen Betrieb, dass die fünftbeste Leitung keinen oder nur einen untergeordneten Einfluss auf die Kompensation hat, so wird diese Leitung nicht mehr zur entsprechenden Kompensationsschaltung K1, K2, Kn durchgeschaltet. Die im Speicher als sechstbeste Leitung abgespeicherte Leitung wird nun zusätzlich durchgeschaltet. Der Prozessor ist somit in der Lage, die Rangfolge der ausgewählten Leitungen während des Betriebs zu ändern und die Kompensation des Nebensprechens zu optimieren. Durch Speicherung der aktuelle Konfiguration und Wiederverwendung bei der nächsten Verbindung ist der Prozessor in der Lage, für jede Empfangsleitung individuell eine optimierte Kompensation des Nebensprechens bereitzustellen und darauf aufbauend gegebenenfalls eine adaptive Optimierung während des Betriebs durchzuführen.

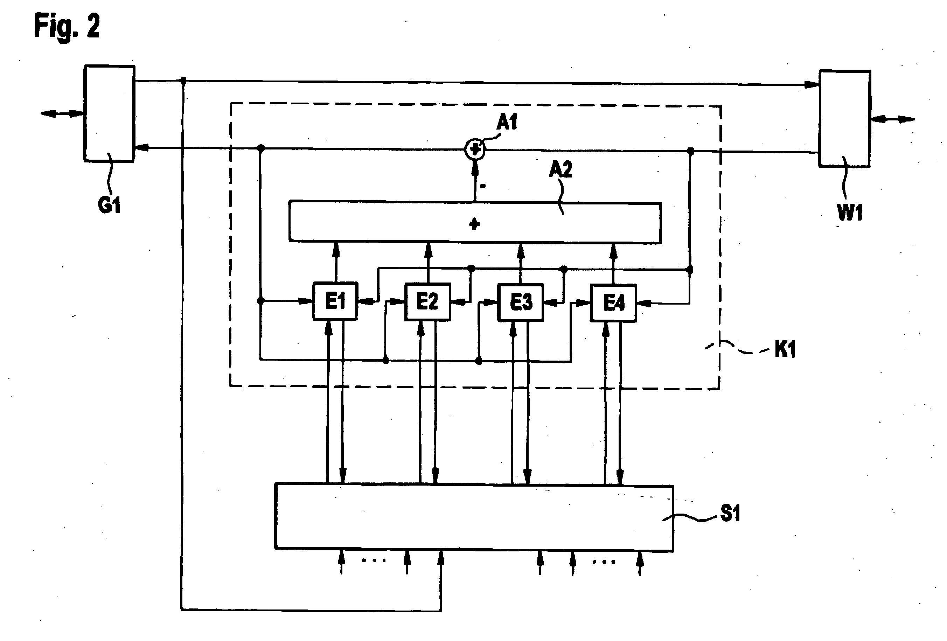

Fig. 2 zeigt eine Kompensationsschaltung der erfindungsgemäßen Telekommunikations-Vorrichtung aus Fig. 1. Im folgenden wird ein detaillierter Aufbau der ersten Kompensationsschaltung K1 aus Fig. 1 beschrieben. Die übrigen n-1 Kompensationsschaltungen K2, Kn entsprechen in ihrem Aufbau und Funktionsweise der ersten Kompensationsschaltung K1.

Kompensationsschaltung K1 ist mit der ersten Weiche W1, der ersten Weiche G1 und der Schaltvorrichtung S1 verbunden. Sie dient der Kompensation von Nebensprechen in der ersten Empfangsleitung.

Kompensationsschaltung K1 weist vier Echo Canceller E1, E2, E3, E4 und zwei Addierer A1, A2 auf.

Jeder Echo Canceller E1, E2, E3, E4 dient der Bereitstellung eines Kompensationssignals und der Ermittlung des Korrelationsgrads des Kompensationssignals. Die Kompensationssignale der vier Echo Canceller E1, E2, E3, E4 werden im Addierer A2 addiert und mittels des Addierers A1 negativ zu den Empfangssignalen der ersten Empfangsleitung addiert zwecks Kompensation des Nebensprechens. Die Empfangssignale und die negativ addierten Kompensationssignale werden zu den Echo Cancellern E1, E2, E3, E4 rückgekoppelt.

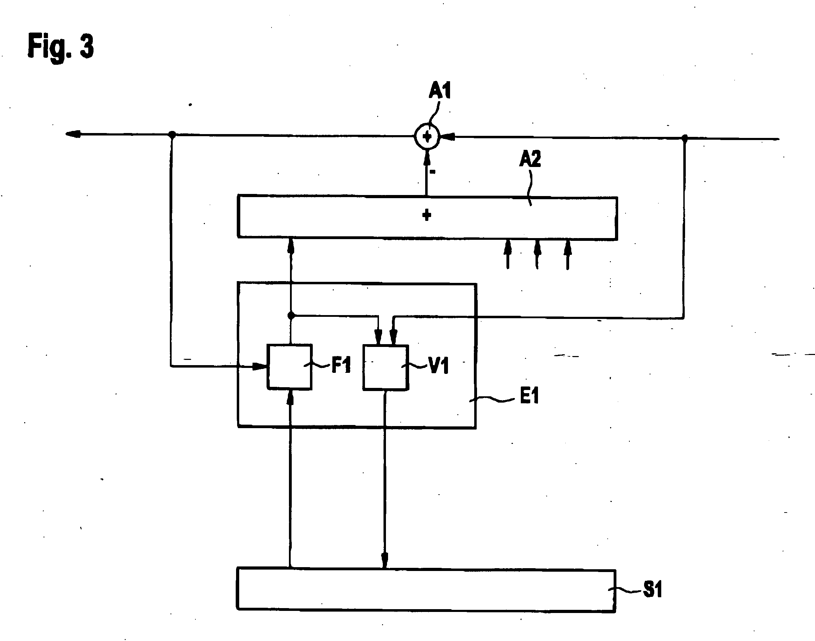

Fig. 3 zeigt einen Echo-Canceller der Kompensationsschaltung aus Fig. 2. Im folgenden wird ein detaillierter Aufbau des ersten Echo Cancellers E1 aus Fig. 2 beschrieben. Die übrigen drei Echo Canceller E2, E3, E4 entsprechen in ihrem Aufbau und Funktionsweise dem ersten Echo Canceller E1.

Echo Canceller E1 ist mit der Schaltvorrichtung S1, dem Addierer A2 sowie der ersten Empfangsleitung vor und nach dem Addierer A1 verbunden.

Echo Canceller E1 dient der Bereitstellung eines Kompensationssignals und der Ermittlung des Korrelationsgrads des Kompensationssignals und weist dazu ein adaptives Filter F1 und einen Vergleicher V1 auf.

Das adaptive Filter F1 hat zwei Eingänge und einen Ausgang. Dem einen Eingang wird von der Schaltvorrichtung S1 das Kompensationssignal einer ausgewählten Kompensationsleitung zugeführt. Dem anderen Eingang ist das rückgekoppelte Empfangsignal der ersten Empfangsleitung zugeführt. Die Filterparameter bzw. Filterkoeffizienten werden z.B. durch einen geeigneten Adaptionsalgorithmus ermittelt. Jedes adaptive Filter weist z.B. ca. 50 Koeffizientenblöcke bzw. Gatter auf, so dass je eingespartem Filter eine erhebliche Kostenreduktion erfolgt. Wenn das Kompensationssignal im rückgekoppelten Empfangssignal vorhanden ist korreliert es im adaptiven Filter und steht am Ausgang des adaptiven Filter zur Kompensation zur Verfügung.

Der Vergleicher V1 hat zwei Eingänge und einen Ausgang. Dem einen Eingang ist das Ausgangssignal des adaptiven Filters F1 zugeführt. Dem anderen Eingang ist das Empfangssignal der ersten Empfangsleitung zugeführt. Der Vergleicher V1 ermittelt den Korrelationsgrad eines dem adaptiven Filter F1 zugeführten Kompensationssignals. Der Vergleicher V1 ist im einfachsten fall als Komparator aufgebaut, um zu entscheiden, ob das Kompensationssignal korreliert oder nicht korreliert, also für Kompensationszwecke verwendet werden kann oder nicht. Durch Verwendung eines Bitvergleichers kann der Korrelationsgrad quantifiziert werden, also ermittelt werden, wie gut ein Kompensationssignal korreliert. Das Ausgangssignal des Vergleichers V1 wird zur Schaltvorrichtung S1 übertragen, die daraufhin die Auswahl eines bestimmten Kompensationssignals als spezifisches, für die Kompensation zu verwendendes oder nicht zu verwendendes durchführt.

In vorteilhafter Weise können zwischen Weiche W1 und Addierer A1 noch Bauelemente wie ein A/D-Umsetzer und ein Bandpassfilter eingefügt werden.

Die Schaltvorrichtung S1 kann in vorteilhafter Weise eine Schaltmatrix, eine Auswerteeinheit und eine Recheneinheit beinhalten. Alternativ beinhaltet die Schaltvorrichtung S1 eine Vielzahl von $chaltern, die von einem außerhalb der Schaltvorrichtung S1 angeordneten Prozessor angesteuert werden. Der Prozessor hat Zugriff auf einen Speicher, auf dem zumindest die Information über die ausgewählten, spezifischen Kompensationsleitungen gespeichert sind.

In einer erfindungsgemäßen Telekommunikations-Vorrichtung können ein Prozessor und mehrere Schaltvorrichtungen vorhanden sein. Mittels des einen Prozessors werden dann alle Schaltvorrichtungen gesteuert. Jede Schaltvorrichtung stellt Kompensationssignale für eine Gruppe von Empfangsleitungen bereit. Einer Gruppe gehören beispielsweise 32 Empfangsleitungen an. Für die 32 Empfangsleitungen werden 32 Kompensationsschaltungen benötigt. Jede Kompensationsschaltung beinhaltet vier adaptive Filter zur Bereitstellung von vier Kompensationssignalen. Für die gesamte Gruppe werden lediglich vier mal 32 gleich 128 adaptive Filter benötigt. Eine Schaltvorrichtung stellt somit 128 Kompensationssignale zur Verfügung.

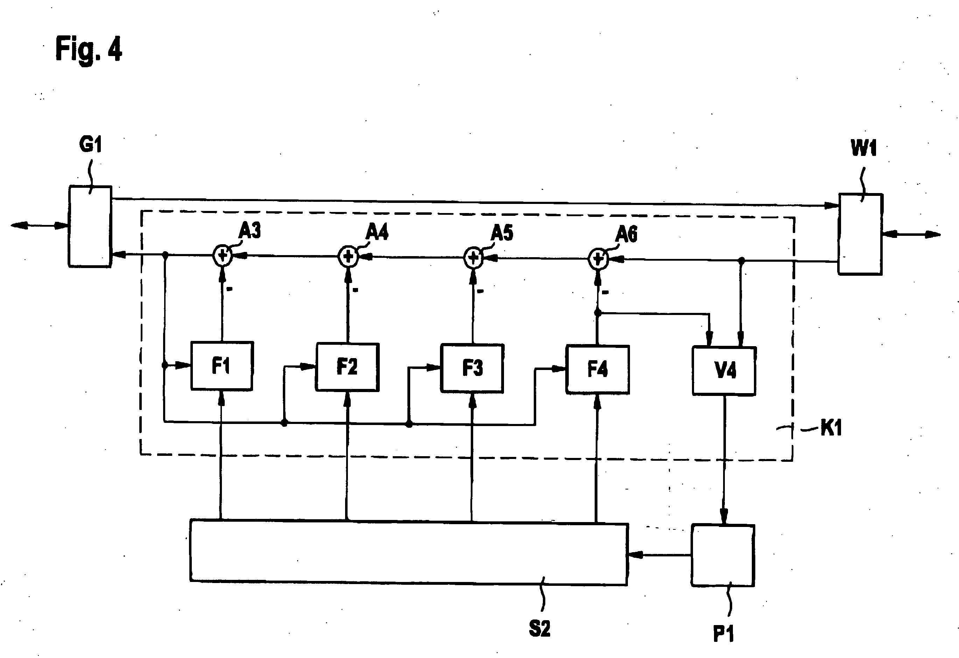

Das zweite Ausführungsbeispiel wird nun unter Zuhilfenahme der Figuren 4 bis 6 erläutert.

Fig. 4 zeigt eine Kompensationsschaltung der erfindungsgemäßen Telekommunikations-Vorrichtung aus Fig. 1. Im folgenden wird ein detaillierter Aufbau der ersten Kompensationsschaltung K1 aus Fig. 1 beschrieben. Die übrigen n-1 Kompensationsschaltungen K2, Kn entsprechen in ihrem Aufbau und Funktionsweise der ersten Kompensationsschaltung K1. Die Schaltvorrichtung S1 ist als Schaltvorrichtung S2 plus Prozessor P1 ausgeführt.

Kompensationsschaltung K1 ist mit der ersten Weiche W1, der ersten Weiche G1 und der Schaltvorrichtung S2 verbunden. Sie dient der Kompensation von Nebensprechen in der ersten Empfangsleitung.

Kompensationsschaltung K1 weist vier adaptive Filter F1, F2, F3, F4, einen Vergleicher V4 und vier Addierer A3, A4, A5, A6 auf.

Jedes adaptive Filter F1, F2, F3, F4 dient der Bereitstellung eines Kompensationssignals. Vergleicher V4 dient der Ermittlung des Korrelationsgrads des Kompensationssignals. Die Kompensationssignale der vier adaptiven Filter F1, F2, F3, F4 werden im zugehörigen Addierer A3, A4, A5, A6 negativ zu den Empfangsignalen der ersten Empfangsleitung addiert zwecks Kompensation des Nebensprechens. Die Empfangssignale und die negativ addierten Kompensationssignale werden zu den adaptiven Filtern F1, F2, F3, F4 rückgekoppelt.

Das adaptive Filter F1 hat zwei Eingänge und einen Ausgang. Dem einen Eingang wird von der Schaltvorrichtung S2 das Kompensationssignal einer ausgewählten Kompensationsleitung zugeführt. Dem anderen Eingang ist das rückgekoppelte Empfangsignal der ersten Empfangsleitung zugeführt. Die Filterparameter werden z.B. durch einen geeigneten Adaptionsalgorithmus ermittelt. Wenn das Kompensationssignal im rückgekoppelten Empfangssignal vorhanden ist korreliert es im adaptiven Filter und steht am Ausgang des adaptiven Filter zur Kompensation zur Verfügung.

Der Vergleicher V4 hat zwei Eingänge und einen Ausgang. Dem einen Eingang ist das Ausgangssignal des adaptiven Filters F4 zugeführt. Dem anderen Eingang ist das Empfangssignal der ersten Empfangsleitung zugeführt. Der Vergleicher V4 ermittelt den Korrelationsgrad eines dem adaptiven Filter F4 zugeführten Kompensationssignals. Der Vergleicher V4 ist im einfachsten fall als Komparator aufgebaut, um zu entscheiden, ob das Kompensationssignal korreliert oder nicht korreliert, also für Kompensationszwecke verwendet werden kann oder nicht. Durch Verwendung eines Bitvergleichers kann der Korrelationsgrad quantifiziert werden, also ermittelt werden, wie gut ein Kompensationssignal korreliert. Das Ausgangssignal des Vergleichers V4 wird zum Prozessor P1 übertragen, der daraufhin über die Schaltvorrichtung S2 die Auswahl eines bestimmten Kompensationssignals als spezifisches, für die Kompensation zu verwendendes oder nicht zu verwendendes durchführt.

Beim zweiten Ausführungsbeispiel wird je Kompensationsschaltung nur ein Vergleicher benötigt. Dies reduziert die Herstellungskosten. Während der Trainingsphase wird jeder Kompensationsschaltung sukzessive ein Kompensationssignal zur Ermittlung des Korrelationsgrads zugeführt. Dazu ist nur ein Vergleicher notwendig. Damit können gegenüber dem ersten Ausführungsbeispiel drei Vergleicher je Kompensationsschaltung eingespart werden, allerdings mit dem Nachteil, dass während des Betriebs nicht gleichzeitig alle vier adaptiven Filter überwacht werden können. Dies kann dadurch teilweise behoben werden, dass während des Betriebs die Kompensationssignale zeitlich rollierend über die vier adaptiven Filter verteilt werden, so dass in gewissen Zeitabschnitten sukzessive alle vier ausgewählten Kompensationssignale am adaptiven Filter F4 anliegen und somit eine Überwachung zumindest zeitweise möglich ist. Das erste Ausführungsbeispiel behält allerdings den Vorteil, dass während der Trainingsphase gleichzeitig vier Kompensationssignale zur Ermittlung des Korrelationsgrads einer Kompensationsschaltung zugeführt werden können und somit die Ermittlung der vier stärksten Störer viermal schneller erfolgen kann als beim zweiten Ausführungsbeispiel. Für die Steuerung des Ablaufs während der Trainingsphase und gegebenenfalls während des Betriebs wird die Schaltvorrichtung S1 bzw. der Prozessor P1 entsprechend programmiert.

Beim zweiten Ausführungsbeispiel werden die Ausgangssignale des Addierers A3 auf alle adaptiven Filter F1, F2, F3, F4 zurückgekoppelt. Alternativ können die Ausgangsignale des Addierers A3 auf adaptives Filter F1, die Ausgangsignale des Addierers A4 auf adaptives Filter F2, Ausgangsignale des Addierers A5 auf adaptives Filter F3 und Ausgangsignale des Addierers A6 auf adaptives Filter F4 rückgekoppelt werden.

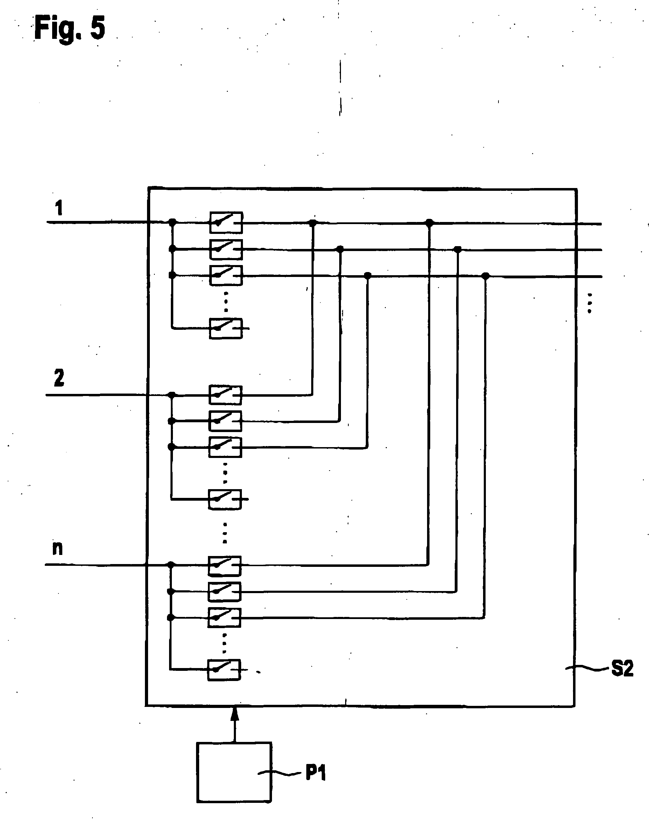

Fig. 5 zeigt eine Schaltvorrichtung für die weitere Kompensationsschaltung aus Fig. 4.

Die Schaltvorrichtung S2 beinhaltet beispielsweise n Eingänge und k mal n Ausgänge; n ist die Anzahl der Sendeleitungen, k ist die Anzahl der adaptiven Filter je Kompensationsschaltung. n ist beispielsweise 32 und k 4. In der Schaltvorrichtung sind für jede der n Eingänge 128 Schalter vorgesehen. Die Anzahl der Schalter ergibt sich aus der Anzahl der Ausgänge der Schaltvorrichtung S2, die 32 mal 4 gleich 128 beträgt. Jeder Schalter ist auf der einen Seite mit jedem Ausgang verbunden und auf der anderen Seite mit einem Eingang. Dadurch ergibt sich die Möglichkeit, jeden Eingang auf jeden Ausgang schalten zu können. Angesteuert werden die Schalter durch den Prozessor P1.

Während der Trainingsphase wird z.B. der vierte Schalter der ersten Gruppe geschlossen, um den ersten Eingang mit dem vierten Ausgang zu verbinden und das Signal der ersten Sendeleitung dem vierten adaptiven Filter der ersten Kompensationsschaltung zuzuführen und zu ermitteln, ob das Signal der ersten Signalleitung einen negativen Einfluss auf die Empfangssignale der ersten Empfangsleitung hat. Einer Sendeleitung ist dabei jeweils eine Gruppe von Schaltern zugeordnet, z.B. der ersten Sendeleitung die erste Gruppe von Schaltern, der zweiten Sendeleitung die zweite Gruppe von Schaltern, usw. Gleichzeitig kann der achte Schalter der zweiten Gruppe geschlossen werden, um den zweiten Eingang mit dem achten Ausgang zu verbinden und das Signal der zweiten Sendeleitung dem vierten adaptiven Filter der zweiten Kompensationsschaltung zuzuführen und zu ermitteln, ob das Signal der zweiten Signalleitung einen negativen Einfluss auf die Empfangssignale der zweiten Empfangsleitung hat. Gleichzeitig kann der zwölfte Schalter der dritten Gruppe geschlossen werden, um den dritten Eingang mit dem zwölften Ausgang zu verbinden und das Signal der dritten Sendeleitung dem vierten adaptiven Filter der dritten Kompensationsschaltung zuzuführen und zu ermitteln, ob das Signal der dritten Signalleitung einen negativen Einfluss auf die Empfangssignale der dritten Empfangsleitung hat, usw.
In einem zweiten Schritt wird z.B. der achte Schalter der ersten Gruppe geschlossen, um den ersten Eingang mit dem achten Ausgang zu verbinden und das Signal der ersten Sendeleitung dem vierten adaptiven Filter der zweiten Kompensationsschaltung zuzuführen und zu ermitteln, ob das Signal der ersten Signalleitung einen negativen Einfluss auf die Empfangssignale der zweiten Empfangsleitung hat, usw. Sukzessive wird so ermittelt, welche Sendesignale welche negativen Einflüsse auf welche Empfangssignale haben. Nach Abschluss der Ermittlung werden diejenigen Sendesignale als Kompensationssignale ausgewählt und spezifiziert, die jeweils die größten Störeinflüsse haben. Die ausgewählten, spezifischen Signale werden den Kompensationsschaltungen dann durch Schließen der entsprechenden Schalter zugeführt. Wurden für die erste Empfangsleitung beispielsweise die Sendesignale der ersten, vierten, zehnten und vierzehnten Sendeleitungen als größte Störer ermittelt, so werden z.B. der erste Schalter der ersten Gruppe, der zweite Schalter der vierten Gruppe, der dritte Schalter der zehnten Gruppe und der vierte Schalter der vierzehnten Gruppe geschlossen.

Die Implementierung der Schaltvorrichtung S2 ist beispielhaft und kann durch jede andere Implementierung ersetzt werden, die die Funktion erfüllt, jeden Eingang auf jede Kompensationsschaltung schalten zu können. Anstelle von separaten Leitungen kann auch eine Implementierung mittels eines oder mehrerer Busse verwendet werden.

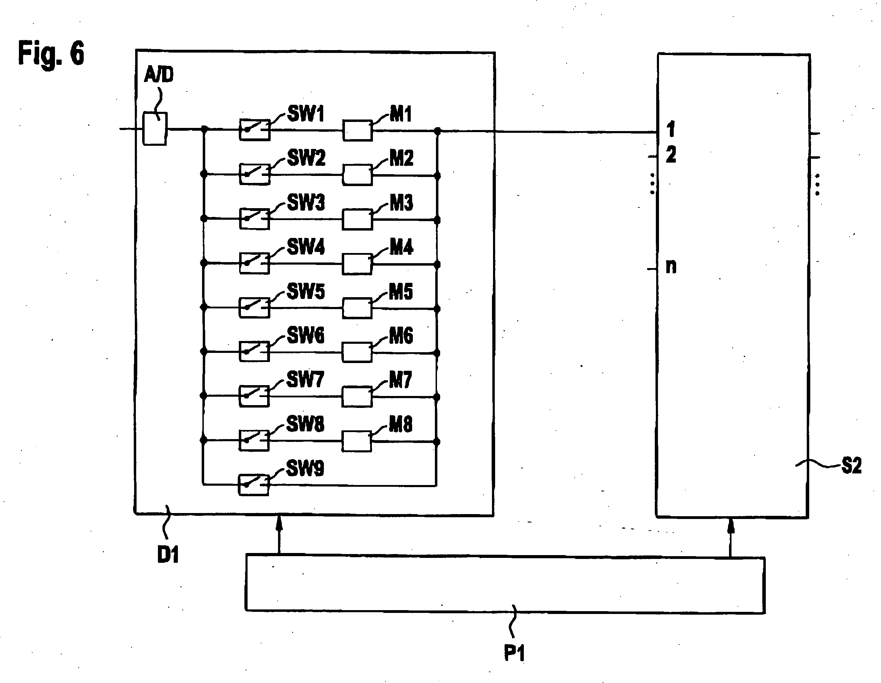

Fig. 6 zeigt ein Dienstauswahlmodul zur Vorschaltung vor die Schaltvorrichtung aus Fig. 5.

Das Dienstauswahlmodul D1 ist vor den ersten Eingang der Schaltvorrichtung S2 geschaltet und wird durch Prozessor P1 gesteuert. Hat die Schaltvorrichtung S2 n Eingänge , so ist z.B. vor jeden Eingang jeweils ein Dienstauswahlmodul geschaltet, das in seinem Aufbau dem Dienstauswahlmodul D1 entspricht. Bei 32 Eingängen sind somit 32 Dienstauswahlmodule notwendig.

Die Dienstauswahlmodule dienen dem Zweck, zusammen mit den Kompensationsschaltungen aus mindestens einem Teil der der Schaltvorrichtung zugeführten Leitungen den auf der jeweiligen Leitung übertragenen Dienst zu ermitteln.
Das Dienstauswahlmodul D1 beinhaltet mindestens zwei Dienst-spezifische Modems oder Dienst-spezifische Demodulatoren und zugehörige Schalter, um die Signale einer Leitung wahlweise jedem Modem bzw. Demodulator zuführen zu können. Jedes Dienst-spezifische Modem bzw. jeder Demodulator demoduliert die empfangenen Signale einer Leitung für einen bestimmten Dienst. Demodulierte Signale sind geeigneter für die Kompensation, wodurch diese verbessert wird.
Das Dienstauswahlmodul D1 beinhaltet im Beispiel acht Dienst-spezifische Modems M1, M2, M3, M4, M5, M6, M7, M8 und acht zugeordnete Schalter SW1, SW2, SW3, SW4, SW5, SW6, SW7, SW8.

Ein Dienst-spezifische Modem M1, M2, M3, M4, M5, M6, M7, M8 und ein zugeordneter Schalter SW1, SW2, SW3, SW4, SW5, SW6, SW7, SW8 sind in Reihe miteinander verschaltet. Die einzelnen Reihenschaltungen sind parallel geschaltet. Alternativ können die Dienst-spezifischen Modems M1, M2, M3, M4, M5, M6, M7, M8 in Reihe geschaltet werden und die zugehörigen Schalter SW1, SW2, SW3, SW4, SW5, SW6, SW7, SW8 jeweils parallel zum jeweiligen Dienst-spezifischen Modem M1, M2, M3, M4, M5, M6, M7, M8.

Die Implementierung des Dienstauswahlmoduls D1 ist beispielhaft und kann durch jede andere Implementierung ersetzt werden, die die Funktion erfüllt, den Eingang über jedes Dienst-spezifische Modem M1, M2, M3, M4, M5, M6, M7, M8 schalten zu können. Anstelle von separaten Leitungen kann auch eine Implementierung mittels eines oder mehrerer Busse verwendet werden.

Jedes Dienst-spezifische Modem M1, M2, M3, M4, M5, M6, M7, M8 ist geeignet, Signale eines bestimmten Dienstes zu demodulieren. So ist Modem M1 z.B. geeignet ADSL-Signale zu demodulieren, Modem M2 HDSL-Signal, Modem M3 SDSL-Signale, Modem M4 G.SHPSL-Signale, Modem M5 VDSL-Signale, Modem M6 PCM30-Signale, Modem M7 POTS-Signale, Modem M8 ISDN-Signale.

Zusätzlich ist in vorteilhafter Weise ein neunter Schalter SW9 vorgesehen, um Signale einer Leitung ohne Demodulation weiterzuleiten. Die kann u.a. dann sinnvoll sein, wenn auf der Leitung ein Dienst übertragen wird, der nicht durch die Dienst-spezifischen Modems M1, M2, M3, M4, M5, M6, M7, M8 demoduliert werden kann. Aus Kostengründen kann es sinnvoll sein, nur die im Einsatzbereich der Telekommunikations-Vorrichtung üblichen Dienste abzudecken und im Falle der Übertragung anderer Dienste auf eine optimierte Kompensation zu verzichten und diese ohne Demodulation weiterzuleiten.

Zusätzlich ist ferner ein Analog/Digital-Umsetzer A/D vorgesehen, um die empfangenen Signale vor der Zuführung zu den Dienst-spezifischen Modems M1, M2, M3, M4, M5, M6, M7, M8 zu digitalisieren. Zusätzlich kann parallel geschaltet zum Analog/Digital-Umsetzer A/D ein weiterer Schalter vorgesehen sein, um die Auswahl zwischen einer analogen und einer digitalen Weiterleitung zu ermöglichen und im Falle des Empfangs von digitalen Signalen diese ohne Analog/Digital-Umsetzer A/D weiterleiten zu können.

Während der Trainingsphase wird z.B. der vierte Schalter der ersten Gruppe geschlossen, um den ersten Eingang mit dem vierten Ausgang zu verbinden und das Signal der ersten Sendeleitung dem vierten adaptiven Filter der ersten Kompensationsschaltung zuzuführen und zu ermitteln, ob das Signal der ersten Signalleitung einen negativen Einfluss auf die Empfangssignale der ersten Empfangsleitung hat. Einer Sendeleitung ist dabei jeweils eine Gruppe von Schaltern zugeordnet, z.B. der ersten Sendeleitung die erste Gruppe von Schaltern, der zweiten Sendeleitung die zweite Gruppe von Schaltern, usw. Gleichzeitig wird z.B. der Schalter SW9 des Dienstauswahlmoduls D1 geschlossen sowie der parallel zum Analog/Digital-Umsetzer A/D angeordnete Schalter, um zunächst Signale ohne Demodulation zuzuführen. Wenn die Signale der ersten Sendeleitung mit der ersten Empfangsleitung korrelieren kann sukzessive jedes Modem M1, M2, M3, M4, M5, M6, M7, M8 durchgeschaltet werden, um zu ermitteln, welcher Dienst auf der ersten Sendeleitung übertragen wird. Ist der Dienst ermittelt, was sich durch eine verbesserte Korrelation ausdrückt, wird das zugehörige Modem M1, M2, M3, M4, M5, M6, M7, M8 dauerhaft durchgeschaltet, d.h. werden auf der ersten Sendeleitung beispielsweise SDSL-Signale übertragen, so wird Schalter SW3 dauerhaft geschlossen. Die Ermittlung, ob Korrelation vorliegt erfolgt mittels Vergleicher V4.

Alternativ werden der vierte Schalter der ersten Gruppe geschlossen und dann sukzessive die Schalter SW1 bis SW9, um zu ermitteln, bei welcher Durchschaltung die beste Konvergenz auftritt, um diese abzuspeichern und gegebenenfalls dauerhaft durchzuschalten.

In einer weiteren Variante kann zwischen Vergleicher V4 und Filter F4 ein Korrelator eingefügt werden, der mit dem Prozessor verbunden wird und mittels dessen z.B. über ein Signalisierungsverfahren eine Entscheidung über eine Korrelation getroffen wird, wobei Vergleicher V4 dann für die Entscheidung um welchen Wert eine Konvergenz vorliegt verwendet wird. Mittels des Korrelators wird somit zunächst ermittelt, welcher Dienst auf der ersten Sendeleitung übertragen wird, dieser dann durchgeschaltet und anschließend mittels des Vergleichers V4 ermittelt, ob dieser Dienst mit den Empfangssignalen der ersten Empfangsleitung konvergiert.

Vergleichbare Schritte werden für die anderen Empfangsleitungen durchgeführt. Sukzessive wird so ermittelt, welche Sendesignale welche Dienste übertragen und welche negativen Einflüsse sie auf welche Empfangssignale haben, wobei nach der Ermittlung eines Dienstes diese bei der Überprüfung der Konvergenz auf einer anderen Empfangleitung nicht mehr durchgeführt zu werden braucht. Nach Abschluss der Ermittlung werden diejenigen Sendesignale als Kompensationssignale ausgewählt und spezifiziert, die jeweils die größten Störeinflüsse haben. Die ausgewählten, spezifischen Signale werden den Kompensationsschaltungen dann durch Schließen der entsprechenden Schalter zugeführt. Wurden für die erste Empfangsleitung beispielsweise die Sendesignale der ersten, vierten, zehnten und vierzehnten Sendeleitungen als größte Störer ermittelt, so werden z.B. der erste Schalter der ersten Gruppe, der zweite Schalter der vierten Gruppe, der dritte Schalter der zehnten Gruppe und der vierte Schalter der vierzehnten Gruppe geschlossen. Zusätzlich werden die entsprechenden Schalter der zugehörigen Modems M1, M2, M3, M4, M5, M6, M7, M8 geschlossen; wurden für die erste Sendeleitung z.B. G.SHDSL-Signale ermittelt, so wird Schalter SW4 geschlossen.

Beide Ausführungsbeispiele können miteinander kombiniert werden. Beispielsweise können in einer Kompensationsschaltung vier adaptive Filter und zwei Vergleicher verwendet werden. Es ist auch möglich in einer Kompensationsschaltung vier adaptive Filter und einen Vergleicher zu verwenden, wobei der Vergleicher über vier Schalter mit den vier adaptiven Filtern verbunden ist zwecks Zuschaltung bei Bedarf. Beim ersten Ausführungsbeispiel können wie beim zweiten Ausführungsbeispiel vier Addierer verwendet werden statt zwei, usw. Bei ersten Ausführungsbeispiel können wie beim zweiten Ausführungsbeispiel Dienstauswahlmodule verwendet werden.

In beiden Ausführungsbeispielen sind die Angaben von Zahlen beispielhaft. Anstelle von 32 Empfangsleitungen können mittels einer Schaltvorrichtung beispielsweise auch nur 16, 24 oder gar 64 Empfangsleitungen kompensiert werden. Bei 32 zu kompensierenden Empfangsleitungen können in jeder Kompensationsschaltung statt vier z.B. auch 2, 6 oder 8 adaptive Filter vorgesehen sein. Bei 16 zu kompensierenden Empfangsleitungen können in jeder Kompensationsschaltung z.B. 2, 4 oder 6 adaptive Filter vorgesehen sein.

Beide Schaltvorrichtungen S1 und S2 haben jeweils eine Anzahl von Eingängen und eine Anzahl von Ausgängen. Die Anzahl der Eingänge kann n + m betragen, wobei n der Anzahl der Sendeleitungen einer Gruppe von Sendeleitungen entspricht, die in einem Bündel von Leitungen übertragen werden. n kann beispielsweise die Werte 16, 24, 32, 64 annehmen. m entspricht beispielsweise der Anzahl von Empfangsleitungen, die einer Gruppe von Empfangsleitungen zugehören, die in einem Bündel von Leitungen übertragen werden. In einem Bündel von Leitungen sind zumeist auch Blindleitungen vorhanden, die zum teil als Reserveleitungen dienen und nicht für den Datenverkehr genutzt werden und somit als Blindleitungen fungieren. m kann auch der Anzahl der Empfangs- und Blindleitungen entsprechen. Die Anzahl der Eingänge einer Schaltvorrichtung kann abhängig vom Anwendungsfall auf n oder m beschränkt sein. Soll nur Nahnebensprechen kompensiert werden, so ist m=0 zu wählen; soll nur Fernnebensprechen kompensiert werden, so ist n=0 zu wählen. Die Anzahl der Ausgänge einer Schaltvorrichtung ist abhängig von der Anzahl der adaptiven Filter einer Kompensationsschaltung und der Anzahl der zu kompensierenden Empfangsleitungen. Wird die Anzahl der adaptiven Filter einer Kompensationsschaltung mit k und der Anzahl der zu kompensierenden Empfangsleitungen mit n bezeichnet, so sind im Fall k=4 und n=32 k mal n gleich 128 Ausgänge je Schaltvorrichtung vorgesehen. Im Fall k=4 und n=16 sind k mal n gleich 64 Ausgänge je Schaltvorrichtung vorgesehen.

## Patentansprüche

1. Telekommunikations-Vorrichtung zur Kompensation von Nebensprechen in einem Bündel von 2-Draht Leitungen über die mindestens zwei verschiedene Dienste übertragen werden, beinhaltend mindestens zwei Kompensationsschaltungen (K1, K2, Kn) für mindestens zwei Empfangsleitungen, **dadurch gekennzeichnet, dass** mindestens vier Weichen (W1, W2, Wn) und eine Schaltvorrichtung (S1, S2) vorgesehen ist, wobei die Weichen (W1, W2, Wn) derart ausgestaltet sind, jeweils eine 2-Draht-4-Draht-Umsetzung zwecks Separierung von Sende- und Empfangsleitungen durchzuführen und wobei die Schaltvorrichtung (S1, S2) derart ausgestaltet ist, zusammen mit den Kompensationsschaltungen (K1, K2, Kn) aus einer Vielzahl von Leitungen für individuelle Empfangsleitungen spezifische Kompensationssignale auszuwählen, wobei die Auswahl derart erfolgt, dass nur solche Signale von Sende-, Empfangs- und/oder Blindleitungen ausgewählt werden, die einen erheblichen Störeinfluss auf das jeweilige Empfangssignal haben.

2. Telekommunikations-Vorrichtung gemäß Patentanspruch 1, **dadurch gekennzeichnet, dass** der Schaltvorrichtung (S1, S2) mindestens zwei Dienstauswahlmodule (D1) vorgeschaltet sind, um zusammen mit den Kompensationsschaltungen (K1, K2, Kn) aus mindestens einem Teil der der Schaltvorrichtung (S1, S2) zugeführten Leitungen den auf der jeweiligen Leitung übertragenen Dienst zu ermitteln.

3. Telekommunikations-Vorrichtung gemäß Patentanspruch 1, **dadurch gekennzeichnet, dass** jedes Dienstauswahlmodul (D1) mindestens zwei Dienst-spezifische Modems (M1, M2, M3, M4, M5, M6, M7, M8) oder Dienst-spezifische Demodulatoren und zugehörige Schalter (SW1, SW2, SW3, SW4, SW5, SW6, SW7, SW8) beinhaltet, um die Signale einer Leitung wahlweise jedem Modem (M1, M2, M3, M4, M5, M6, M7, M8) bzw. Demodulator zuführen zu können.

4. Telekommunikations-Vorrichtung gemäß Patentanspruch 1, **dadurch gekennzeichnet, dass** jede Kompensationsschaltung (K1, K2, Kn) mindestens zwei adaptive Filter (F1, F2, F3, F4) zur Korrelation der Empfangssignale mit spezifischen Kompensationssignalen beinhaltet.

5. Telekommunikations-Vorrichtung gemäß Patentanspruch 4, **dadurch gekennzeichnet, dass** jede Kompensationsschaltung (K1, K2, Kn) mindestens einen Vergleicher (V1, V4) zum Vergleichen der Empfangssignale mit den Ausgangssignalen mindestens einen adaptiven Filters (F1, F4) beinhaltet.

6. Telekommunikations-Vorrichtung gemäß Patentanspruch 4, **dadurch gekennzeichnet, dass** das Produkt der Anzahl der Empfangsleitungen multipliziert mit der Anzahl der adaptiven Filter (F1, F2, F3, F4) mindestens um den Faktor vier kleiner ist als das Produkt der Anzahl der Empfangsleitungen multipliziert mit der Anzahl der Empfangsleitungen.

7. Telekommunikations-Vorrichtung gemäß Patentanspruch 4, **dadurch gekennzeichnet, dass** jeder Empfangsleitung eine Kompensationsschaltung (K1, K2, Kn) zugehörig ist, dass für jede Empfangsleitung Addiermittel (A1, A2, A3, A4, A5, A6) zur Addition der Ausgangssignale der adaptiven Filter (F1, F2, F3, F4) der zugehörigen Kompensationsschaltung (K1, K2, Kn) und zur negativen Addition der addierten Ausgangssignale mit den Empfangssignalen der Empfangsleitung vorgesehen sind.

8. Telekommunikations-Vorrichtung gemäß Patentanspruch 5, **dadurch gekennzeichnet, dass** die Schaltvorrichtung (S2) eine Vielzahl von Schaltern aufweist und ein Prozessor (P1) zur Auswertung der Ausgangssignale der Vergleicher (V1, V4) und zur Ansteuerung der Schalter vorgesehen ist.

9. Telekommunikations-Vorrichtung gemäß Patentanspruch 4, **dadurch gekennzeichnet, dass** die Schaltvorrichtung (S1, S2) mindestens n Eingänge zum Verbinden mit n Sendeleitungen und mindestens k mal n Ausgangsleitungen zum Verbinden mit den adaptiven Filtern (F1, F2, F3, F4) der Kompensationsschaltungen (K1, K2, Kn) aufweist, wobei n und k natürliche Zahlen sind und wobei k kleiner n gilt.

10. Telekommunikations-Vorrichtung gemäß Patentanspruch 1, **dadurch gekennzeichnet, dass** die Kompensationssignale Signale von Sende-, Empfangs- und/oder Blindleitungen sind.

11. Verfahren zum Kompensieren von Nebensprechen in einem Bündel von 2-Draht Leitungen über die mindestens zwei verschiedene Dienste übertragen werden, **dadurch gekennzeichnet, dass** mittels mindestens vierer Weichen (W1, W2, Wn) jeweils eine 2-Draht-4-Draht-Umsetzung zwecks Separierung von Sende- und Empfangsleitungen durchgeführt wird, dass für zu kompensierende Empfangssignale einer separierten Empfangsleitung über eine Schaltvorrichtung (S1, S2) verschiedene Kompensationssignale einer zugehörigen Kompensationsschaltung (K1, K2, Kn) zugeführt werden und eine Auswahl von spezifischen Kompensationssignalen durchgeführt wird in Abhängigkeit vom Korrelationsgrad der Kompensationssignale mit den Empfangssignalen, wobei die Auswahl derart erfolgt, dass nur solche Signale von Sende-, Empfangs- und/oder Blindleitungen ausgewählt werden, die einen erheblichen Störeinfluss auf das jeweilige Empfangssignal haben.

12. Verfahren gemäß Patentanspruch 11, **dadurch gekennzeichnet, dass** in der Kompensationsschaltung (K1, K2, Kn) mittels mindestens zweier adaptiver Filter (F1, F2, F3, F4) die Empfangssignale mit den Kompensationssignalen korreliert werden und mittels mindestens eines Vergleichers (V1, V4) die Empfangssignale mit den Ausgangssignalen mindestens eines adaptiven Filters (F1, F4) verglichen werden, und dass abhängig von den Ausgangsignalen des mindestens einen Vergleichers (V1, V4) spezifische Kompensationssignale mittels eines Prozessors (P1) ausgewählt und den mindestens zwei adaptiven Filtern (F1, F2, F3, F4) mittels der Schaltvorrichtung (S1, S2) zugeführt werden.

## Claims

1. Telecommunications apparatus for the compensation of crosstalk in a bundle of 2-wire lines via which at least two different services are transmitted, said apparatus comprising at least two compensation circuits (K1, K2, Kn) for at least two receiving lines, **characterized in that** at least four separating filters (W1, W2, Wn) and a switching apparatus (S1, S2) are provided, the separating filters (W1, W2, Wn) being designed to perform, respectively, a 2-wire to 4-wire conversion for the purpose of separating transmitting lines and receiving lines, and the switching apparatus (S1, S2) being designed to select, together with the compensation circuits (K1, K2, Kn), from a multiplicity of lines, specific compensation signals for individual receiving lines, the selection being effected in such a way that there are selected from transmitting lines, receiving lines and/or stubs only those signals that have a substantial disturbing effect on the respective received signal.

2. Telecommunications apparatus according to Claim 1, **characterized in that** at least two service selection modules (D1) are connected upstream from the switching apparatus (S1, S2), in order to determine, together with the compensation circuits (K1, K2, Kn), from at least some of the lines supplied to the switching apparatus (S1, S2), the service transmitted on the respective line.

3. Telecommunications apparatus according to claim 1, **characterized in that** each service selection module (D1) comprises at least two service-specific modems (M1, M2, M3, M4, M5, M6, M7, M8) or service-specific demodulators and associated switches (SW1, SW2, SW3, SW4, SW5, SW6, SW7, SW8), in order that the signals of a line can be supplied optionally to each modem (M1, M2, M3, M4, M5, M6, M7, M8) or demodulator.

4. Telecommunications apparatus according to Claim 1, **characterized in that** each compensation circuit (K1, K2, Kn) comprises at least two adaptive filters (F1, F2, F3, F4) for correlating the received signals with specific compensation signals.

5. Telecommunications apparatus according to Claim 4, **characterized in that** each compensation circuit (K1, K2, Kn) has at least one comparator (V1, V4) for comparing the received signals with the output signals of at least one adaptive filter (F1, F4).

6. Telecommunications apparatus according to Claim 4, **characterized in that** the product of the number of receiving lines multiplied by the number of adaptive filters (F1, F2, F3, F4) is less, by at least the factor four, than the product of the number of receiving lines multiplied by the number of receiving lines.

7. Telecommunications apparatus according to Claim 4, **characterized in that** a compensation circuit (K1, K2, Kn) appertains to each receiving line, and, for each receiving line, adding means (A1, A2, A3, A4, A5, A6) are provided for the purpose of adding the output signals of the adaptive filters (F1, F2, F3, F4) of the associated compensation circuit (K1, K2, Kn) and negatively adding the added output signals to the received signals of the receiving line.

8. Telecommunications apparatus according to Claim 5, **characterized in that** the switching apparatus (S2) has a multiplicity of switches, and a processor (P1) is provided for evaluating the output signals of the comparators (V1, V4) and for activating the switches.

9. Telecommunications apparatus according to Claim 4, **characterized in that** the switching apparatus (S1, S2) has at least n inputs, for connecting to n transmitting lines, and at least k times n output lines, for connecting to the adaptive filters (F1, F2, F3, F4) of the compensation circuits (K1, K2, Kn), n and k being natural numbers and k being less than n.

10. Telecommunications apparatus according to Claim 1, **characterized in that** the compensation signals are signals from transmitting lines, receiving lines and/or stubs.

11. Method for the compensation of crosstalk in a bundle of 2-wire lines via which at least two different services are transmitted, **characterized in that**, by means of at least four separating filters (W1, W2, WN), a 2-wire to 4-wire conversion is performed, respectively, for the purpose of separating transmitting lines and receiving lines, various compensation signals are supplied to an associated compensation circuit (K1, K2, Kn) via a switching apparatus (S1, S2) for received signals of a separated receiving line that are to be compensated, and a selection of specific compensation signals is performed in dependence on the degree of correlation of the compensation signals with the received signals, the selection being effected in such a way that there are selected from transmitting lines, receiving lines and/or stubs only those signals that have a substantial disturbing effect on the respective received signal.

12. Method according to Claim 11, **characterized in that**, in the compensation circuit (K1, K2, Kn), the received signals are correlated with the compensation signals by means of at least two adaptive filters (F1, F2, F3, F4) and, by means of at least one comparator (V1, V4), the received signals are compared with the output signals of at least one adaptive filter (F1, F4), and specific compensation signals are selected by means of a processor (P1) in dependence on the output signals of the at least one comparator (V1, V4) and supplied to the at least two adaptive filters (F1, F2, F3, F4) by means of the switching apparatus (S1, S2).

## Revendications

1. Dispositif de télécommunication destiné à compenser la diaphonie dans un faisceau de lignes bifilaires sur lesquelles sont transmis au moins deux services différents, comprenant au moins deux circuits de compensation (K1, K2, Kn) pour au moins deux lignes de réception, **caractérisé en ce que** sont prévus au moins quatre répartiteurs (W1, W2, Wn) et un dispositif de commutation (S1, S2), les répartiteurs (W1, W2, Wn) étant configurés pour effectuer une conversion 2 fils/4 fils en vue de séparer les lignes d'émission et de réception et le dispositif de commutation (S1, S2) étant configuré pour déterminer, conjointement avec les circuits de compensation (K1, K2, Kn) et à partir d'une pluralité de lignes, les signaux de compensation spécifiques pour les lignes de réception individuelles, la sélection s'effectuant de telle sorte que seuls sont sélectionnés les signaux des lignes d'émission, de réception et/ou de réactance qui ont une influence parasite très importante sur le signal reçu correspondant.

2. Dispositif de télécommunication selon la revendication 1, **caractérisé en ce qu'**au moins deux modules de sélection de service (D1) sont branchés en amont du dispositif de commutation (S1, S2) pour déterminer, conjointement avec les circuits de compensation (K1, K2, Kn) et à partir d'au moins une partie des lignes acheminées au dispositif de commutation (S1, S2), le service transmis sur la ligne correspondante.

3. Dispositif de télécommunication selon la revendication 1, **caractérisé en ce que** chaque module de sélection de service contient au moins deux modems (M1, M2, M3, M4, M5, M6, M7, M8) spécifiques au service ou démodulateurs spécifiques au service et commutateurs (SW1, SW2, SW3, SW4, SW5, SW6, SW7, SW8) associés spécifiques au service afin de pouvoir acheminer les signaux d'une ligne au choix, à chaque modem (M1, M2, M3, M4, M5, M6, M7, M8) ou démodulateur.

4. Dispositif de télécommunication selon la revendication 1, **caractérisé en ce que** chaque circuit de compensation (K1, K2, Kn) contient au moins deux filtres adaptatifs (F1, F2, F3, F4) pour corréler les signaux reçus avec les signaux de compensation spécifiques.

5. Dispositif de télécommunication selon la revendication 4, **caractérisé en ce que** chaque circuit de compensation (K1, K2, Kn) contient au moins un comparateur (V1, V4) pour comparer les signaux reçus avec les signaux de sortie d'au moins un filtre adaptatif (F1, F4).

6. Dispositif de télécommunication selon la revendication 4, **caractérisé en ce que** le produit du nombre de lignes de réception par le nombre de filtres adaptatifs (F1, F2, F3, F4) est inférieur au moins d'un facteur quatre au produit du nombre de lignes de réception par le nombre de lignes de réception.

7. Dispositif de télécommunication selon la revendication 4, **caractérisé en ce qu'**un circuit de compensation (K1, K2, Kn) appartient à chaque ligne de réception, que pour chaque ligne de réception sont prévus des moyens additionneurs (A1, A2, A3, A4, A5, A6) pour additionner les signaux de sortie des filtres adaptatifs (F1, F2, F3, F4) du circuit de compensation (K1, K2, Kn) correspondant et pour additionner négativement les signaux de sortie additionnés avec les signaux reçus de la ligne de réception.

8. Dispositif de télécommunication selon la revendication 5, **caractérisé en ce que** le dispositif de commutation (S2) présente une pluralité de commutateurs et un processeur (P1) pour interpréter les signaux de sortie du comparateur (V1, V4) et pour commander les commutateurs.

9. Dispositif de télécommunication selon la revendication 4, **caractérisé en ce que** le dispositif de commutation (S1, S2) présente au moins n entrées à relier avec n lignes d'émission et au moins k fois n lignes de sortie à relier avec les filtres adaptatifs (F1, F2, F3, F4) du circuit de compensation (K1, K2, Kn), n et k étant des nombres entiers naturels et k étant inférieur à n.

10. Dispositif de télécommunication selon la revendication 1, **caractérisé en ce que** les signaux de compensation sont des signaux des lignes d'émission, de réception et/ou de réactance.

11. Procédé pour compenser la diaphonie dans un faisceau de lignes bifilaires sur lesquelles sont transmis au moins deux services différents, **caractérisé en ce qu'**une conversion 2 fils/4 fils en vue de séparer les lignes d'émission et de réception est à chaque fois effectuée au moyen d'au moins quatre répartiteurs (W1, W2, Wn), que pour les signaux reçus à compenser d'une ligne de réception, différents signaux de compensation sont acheminés à un circuit de compensation (K1, K2, Kn) correspondant par le biais d'un dispositif de commutation (S1, S2) et une sélection de signaux de compensation spécifiques est effectuée en fonction du degré de corrélation des signaux de compensation avec les signaux reçus, la sélection s'effectuant de telle sorte que seuls sont sélectionnés les signaux des lignes d'émission, de réception et/ou de réactance qui ont une influence parasite très importante sur le signal reçu correspondant.

12. Procédé selon la revendication 11, **caractérisé en ce** dans le circuit de compensation (K1, K2, Kn), les signaux reçus sont corrélés avec les signaux de compensation au moyen d'au moins deux filtres adaptatifs (F1, F2, F3, F4) et les signaux reçus sont comparés avec les signaux de sortie d'au moins un filtre adaptatif (F1, F4) au moyen d'au moins un comparateur (V1, V4) et qu'en fonction des signaux de sortie de l'au moins un comparateur (V1, V4), des signaux de compensation spécifiques sont sélectionnés au moyen d'un processeur (P1) et sont acheminés aux au moins deux filtres adaptatifs (F1, F2, F3, F4) au moyen du dispositif de commutation (S1, S1).
